# EUROPÄISCHE PATENTSCHRIFT

(11) **EP 4 067 709 B1**
(45) Veröffentlichungstag und Bekanntmachung des Hinweises auf die Patenterteilung: **29.10.2025**
(21) Anmeldenummer: 22153933.1
(22) Anmeldetag: 28.01.2022
(51) Int. Cl.: F16K 7/12, F16K 27/02

(54) **MEMBRANVENTIL**
MEMBRANE VALVE
SOUPAPE À MEMBRANE

(30) Priorität: 30.03.2021 DE 102021108093
(43) Veröffentlichungstag der Anmeldung: 05.10.2022
(73) Patentinhaber: GEMÜ Gebr. Müller Apparatebau GmbH & Co. Kommanditgesellschaft, 74653 Ingelfingen (DE)
(72) Erfinder: Renner, Maximilian, 74861 Neudenau (DE); Frankenbach, Klaus, 74670 Forchtenberg (DE); Haidt, Harald, 74613 Öhringen (DE)
(74) Vertreter: DREISS Patentanwälte PartG mbB

(56) Entgegenhaltungen:
- DE-A1- 102015 106 957
- DE-A1- 102015 202 775
- DE-A1- 102016 105 840
- US-A1- 2018 112 788

## Beschreibung

Membranventile sind allgemein bekannt.

DE 10 2015 106 957 A1 offenbart ein Membranventil mit einer Befestigungseinheit zum lösbaren Arretieren des Antriebs am Ventilkörper, wobei die Befestigungseinheit einen Bajonettverschluss 0 sowie eine zusätzliche, zentrale Nachspanneinheit aufweist, wodurch eine axiale Spannkraft erzeugt wird.

DE 10 2015 202 775 A1 offenbart ein Membranventil mit einem Einlass und einem Auslass, einem einen Ventilkörper aufweisenden Gehäuseunterteil und einem am Gehäuseunterteil befestigten Gehäuseoberteil, wobei das Gehäuseunterteil topfförmig ausgebildet ist und eine in Richtung des Gehäuseoberteils abragende Topfwand aufweist und das Gehäuseoberteil haubenartig ausgebildet ist und einen in Richtung des Gehäuseunterteils abragenden Haubenwand aufweist, und die beiden Wände in ihren Randbereichen miteinander lösbar verbunden sind, wobei die lösbare Verbindung mittels einer Bajonettverriegelung miteinander verbunden sind, in dem der Randbereich der einen Wand in den Randbereich der anderen Wand hineinragt und der eine Randbereich in Richtung des zugeordneten anderen Randbereichs zugewandte Bajonettnasen und/oder Bajonetttaschen aufweist und der andere Randbereich entsprechende Bajonetttaschen und/oder Bajonettnasen aufweist.

DE 10 2016 105 840 A1 offenbart ein Membranventil mit einem Ventilkörper, der zumindest einen Strömungskanal zur Fluiddurchströmung aufweist, mit einem ein Gehäuse aufweisenden Ventilantrieb und mit einer Membrane, welche durch den Ventilantrieb ausgelenkt werden kann, um den Strömungskanal wahlweise zu öffnen und zu schließen. Die Membrane ist randseitig zwischen Ventilkörper und Ventilantrieb fluiddicht axial geklemmt, wobei die Klemmung der Membrane durch eine Schrauben-Muttern-Verbindung erfolgt und die Schraube und die Mutter die Membrane in Betätigungsrichtung des Ventilantriebs gesehen randseitig umgeben und eines der beiden durch Schraube und Mutter gebildeten Teile nicht drehbar am Ventilkörper oder am Ventilantrieb vorgesehen ist. Das andere der beiden Teile ist ein- bzw. aufschraubbar und zusätzlich rotatorisch beweglich. Das bewegliche Teil ist durch ein Wälzlager am Ventilantrieb oder am Ventilkörper gelagert.

Das der Erfindung zugrundeliegende Problem wird durch ein Membranventil gemäß dem Anspruch 1 gelöst. Vorteilhafte Weiterbildungen finden sich in den Unteransprüchen, der nachfolgenden Beschreibung sowie in den Zeichnungen.

Gemäß einem ersten Aspekt der Beschreibung wird ein Membranventil bereitgestellt, welches umfasst: eine Antriebsbaugruppe mit mindestens einem Verbindungsabschnitt für eine rotatorische Montage der Antriebsbaugruppe und einer Zwischenbaugruppe; die Zwischenbaugruppe mit einem Gehäuse und mit einem zumindest teilweise innerhalb des Gehäuses angeordneten Spannstück, wobei das Gehäuse mindestens einen Verbindungsabschnitt für die rotatorische Montage der Antriebsbaugruppe und der Zwischenbaugruppe umfasst, wobei das Gehäuse mindestens einen in einem Innenraum angeordneten Verbindungsabschnitt für eine rotatorische Montage der Zwischenbaugruppe und des Ventilkörpers umfasst; eine Membran, welche zwischen dem Spannstück und dem Ventilkörper angeordnet ist; und den Ventilkörper mit mindestens einem Verbindungsabschnitt für die rotatorische Montage der Zwischenbaugruppe und des Ventilkörper.

Das Spannstück erlaubt eine über den Umfang der Membran gleichmäßige Verpressung der Membran. Damit wird eine in Umfangsrichtung vergleichmäßigte Dichtwirkung im Bereich der Membran nach außen erreicht.

Der im Innenraum angeordnete Verbindungsabschnitt des Gehäuses verbessert die Abreinigbarkeit des Gehäuses, da die Oberfläche des Gehäuses ohne bzw. mit reduzierten Schmutzkanten ausgeführt werden kann. Der vorstehende Verbindungsabschnitt verbessert also die Abreinigbarkeit des Gehäuses.

Ein vorteilhaftes Beispiel zeichnet sich dadurch aus, dass die Antriebsbaugruppe das Gehäuse unter Zugspannung setzt, und wobei die Antriebsbaugruppe das Spannstück unter Druckspannung setzt.

Vorteilhaft wird so zum einen die Zwischenbaugruppe zu dem Ventilkörper fixiert und gleichzeitig die Membran zwischen dem Spannstück und dem Ventilkörper verklemmt.

Ein vorteilhaftes Beispiel zeichnet sich dadurch aus, dass mindestens ein Dichtabschnitt, welcher insbesondere zwischen dem Gehäuse und dem Spannstück und radial außerhalb des Verbindungsabschnitts des Gehäuses angeordnet ist, den Innenraum von einem Außenraum des Membranventils abdichtet.

Der Dichtabschnitt erlaubt eine schmutzdichte Abkapselung des Innenraums von dem Außenraum. Damit kann der Innenraum frei gestaltet werden. Insbesondere ergeben sich Freiheitsgrade bei der Größe des freien Innenraums. Der so abgedichtete Innenraum kann dazu genutzt werden, um Materialstärken einzelner Elemente der Zwischenbaugruppe zu reduzieren. Folglich ermöglicht der Dichtabschnitt ein verringertes Gewicht der Zwischenbaugruppe, was beispielsweise bei einer Überkopf-Montage vorteilhaft ist.

Ein vorteilhaftes Beispiel zeichnet sich dadurch aus, dass das Gehäuse eine in Richtung des Ventilkörpers abragende Schürze umfasst, an deren Innenwand der Dichtabschnitt angeordnet ist.

Vorteilhaft kann sich die Schürze in Bezug oder gemeinsam mit dem Dichtabschnitt parallel zur Stellachse bewegen. Dadurch wird sowohl die rotatorische Verbindung zwischen der Zwischenbaugruppe und dem Ventilkörper ermöglicht und gleichzeitig die Dichtheit in Bezug zu dem Innenraum gewährleistet.

Ein vorteilhaftes Beispiel zeichnet sich dadurch aus, dass eine Verliersicherung das Spannstück verliersicher zu dem Gehäuse festlegt.

Vorteilhaft verbleibt das Spannstück bei der Montage innerhalb des Gehäuses.

Ein vorteilhaftes Beispiel zeichnet sich dadurch aus, dass mindestens eine zwischen dem Gehäuse und dem Spannstück angeordnete Druckfeder das Spannstück entlang der Stellachse des Membranventils von der Antriebsbaugruppe weg drückt.

Vorteilhaft wird dadurch beim Ansetzen des Antriebs mit der Zwischenbaugruppe eine haptische Rückmeldung an den Monteur abgegeben. Der Monteur wird durch die haptische Rückmeldung aufgefordert, gegen den Federwiderstand zu drücken, um bei Erreichen eines Anschlags eine rotatorische Bewegung zur abzugfesten Verbindung mit dem Ventilkörper durchzuführen.

Ein vorteilhaftes Beispiel zeichnet sich dadurch aus, dass das Spannstück eine Mehrzahl von Anlageflächen, insbesondere von Durchgangsöffnungen durch das Spannstück, umfasst, wobei die Mehrzahl der Anlageflächen eine formschlüssige Verbindung mit dem mindestens einen Verbindungsabschnitt des Ventilkörpers in einer zur Stellachse lotrechten Ebene bereitstellt.

Vorteilhaft wird der mindestens eine Verbindungsabschnitt des Ventilkörpers dazu genutzt, um das Spannstück in Bezug zu dem Ventilkörper auszurichten. Entsprechend lässt sich eine präzisere Ausrichtung und sichere Verklemmung der Membran zwischen dem Ventilkörper und dem Spannstück erreichen. Der Montageprozess und damit die Prozesssicherheit werden damit verbessert.

Ein vorteilhaftes Beispiel zeichnet sich dadurch aus, dass ein Aufnahmeabschnitt des Spannstücks die Membran lotrecht zur Stellachse formschlüssig aufnimmt.

Vorteilhaft stellt der Aufnahmeabschnitt des Spannstücks während der Montage sicher, dass die Membran an der mittels des Aufnahmeabschnitts vorgesehenen Position verbleibt und nicht verrutscht. Die Membran wird somit korrekt positioniert und montiert.

Ein vorteilhaftes Beispiel zeichnet sich dadurch aus, dass das Spannstück in einem zum Ventilkörper angeordneten Bereich nach außen hin freiliegt, und wobei mindestens eine Ausnehmung den Aufnahmeabschnitt für die Membran und einen Außenraum miteinander verbindet.

Vorteilhaft kann durch die Ausnehmung die Dichtheit des Membranventils nach außen überprüft werden. Tritt beispielsweise Prozessflüssigkeit aus der äußeren Öffnung der Ausnehmung ist dies visuell überprüfbar. Auch kann eine Lasche der Membran so nach außen geführt werden, um durch einen RFID-Tag in der Lasche deren Identität festzustellen.

Ein vorteilhaftes Beispiel zeichnet sich dadurch aus, dass nach außen exponierte Oberflächen des Spannstücks und des Ventilkörpers zumindest abschnittsweise bündig zueinander sind.

Vorteilhaft verbessert sich hierdurch die Abreinigbarkeit.

Ein vorteilhaftes Beispiel zeichnet sich dadurch aus, dass das Spannstück innerhalb des Gehäuses, insbesondere mittels des Gehäuses, verdrehsicher und entlang der Stellachse beweglich gelagert ist.

Durch die Verdrehsicherung wird sichergestellt, dass die Membran durch das Spannstück aus der vorbestimmten Position heraus rotiert wird.

Ein vorteilhaftes Beispiel zeichnet sich dadurch aus, dass ein mit einer entlang der Stellachse beweglichen Ventilstange verbundener Kompressor innerhalb des Spannstücks, insbesondere mittels des Spannstücks, verdrehsicher und entlang der Stellachse beweglich gelagert ist.

Vorteilhaft wird durch die Verdrehsicherung gewährleistet, dass das Druckstück, insbesondere wenn es eine Konturierung aufweist, in der vorbestimmten Drehposition die Membran zwischen sich und dem Ventilsteg verpresst, um so das Membranventil zu verschließen.

Ein vorteilhaftes Beispiel zeichnet sich dadurch aus, dass der Verbindungsabschnitt der Antriebsbaugruppe ein Außengewinde umfasst, welches in ein Innengewinde des Verbindungsabschnitts des Gehäuses eingreift.

Vorteilhaft wird auf einfache Art und Weise die Montage und gleichmäßige Verpressung des lateralen Membranabschnitts ermöglicht.

Ein vorteilhaftes Beispiel zeichnet sich dadurch aus, dass der Verbindungsabschnitt der Antriebsbaugruppe drehbar an der Antriebsbaugruppe gelagert ist und/oder wobei der Verbindungsabschnitt der Antriebsbaugruppe mit einer Angriffskontur für ein Werkzeug starr verbunden ist.

Vorteilhaft kann die Drehposition des Antriebsgehäuses unabhängig von der Eindrehung der Spannmutter bzw. des Verbindungsabschnitts in das Spannstück eingestellt werden. Es ergeben sich damit Freiheitsgrade bei der Anordnung der Antriebsbaugruppe.

Ein vorteilhaftes Beispiel zeichnet sich dadurch aus, dass eine Mehrzahl von Verbindungsabschnitten des Ventilkörpers von dem Ventilkörper parallel zur Stellachse abragen und distalen Kopf aufweisen, und wobei eine Mehrzahl von im Innenraum angeordneter Verbindungsabschnitte des Gehäuses Bahnen, welche lotrecht zur Stellachse verlaufen, bereitstellen, wobei die einzelne Bahn einen Einführabschnitt zum Einführen des zugeordneten distalen Kopfes des Verbindungsabschnitts und einen Festlegeabschnitt zur Festlegung des Kopfes umfassen.

Ein weiterer Aspekt der Beschreibung betrifft ein Verfahren zur Montage eines Membranventils. Das Verfahren umfasst: Anordnen einer Antriebsbaugruppe an einer Zwischenbaugruppe durch Verdrehen eines Verbindungsabschnitts der Antriebsbaugruppe zu einem Verbindungsabschnitt eines Gehäuses der Zwischenbaugruppe; Anordnen eines Kompressors und einer Membran an einer Ventilstange, welche mit einem Antrieb der Antriebsbaugruppe zu einer Bewegung entlang der Stellachse verbunden ist; Anordnen der mit der Antriebsbaugruppe verbundenen Zwischenbaugruppe an einem Ventilkörper durch Bewegung der Zwischenbaugruppe auf den Ventilkörper zu, so dass mindestens ein Verbindungsabschnitt des Ventilkörpers zu mindestens einem zugeordneten Verbindungsabschnitt des Gehäuses der Zwischenbaugruppe vorpositioniert wird, und Verdrehen der Zwischenbaugruppe zu dem Ventilkörper, so dass der mindestens eine Verbindungsabschnitt des Gehäuses und der mindestens eine Verbindungsabschnitt des Ventilkörpers das Gehäuse parallel zur Stellachse formschlüssig zu dem Ventilkörper festlegen; und Verspannen eines lateralen Abschnitts der Membran zwischen dem Ventilkörper und einem Spannstück der Zwischenbaugruppe durch Verdrehen des Verbindungsabschnitts der Antriebsbaugruppe zu dem Verbindungsabschnitt des Gehäuses der Zwischenbaugruppe.

In der Zeichnung zeigen:
- Figur 1: einen Schnitt eines Teils eines Membranventils;
- Figur 2: eine Explosionsansicht des Membranventils;
- Figur 3: ein Gehäuse einer Zwischenbaugruppe;
- Figur 4: ein Spannstück der Zwischenbaugruppe;
- Figur 5: einen weiteren Schnitt eines Teils des Membranventils;
- Figur 6: eine perspektivische Ansicht der Zwischenbaugruppe und einer Antriebsbaugruppe;
- Figur 7: ein schematisches Ablaufdiagramm zur Montage des Membranventils;
- Figuren 8 und 9: jeweils eine Explosionsansicht eines weiteren Membranventils; und
- Figur 10: eine Schnittansicht des Membranventils der Figuren 8 und 9.

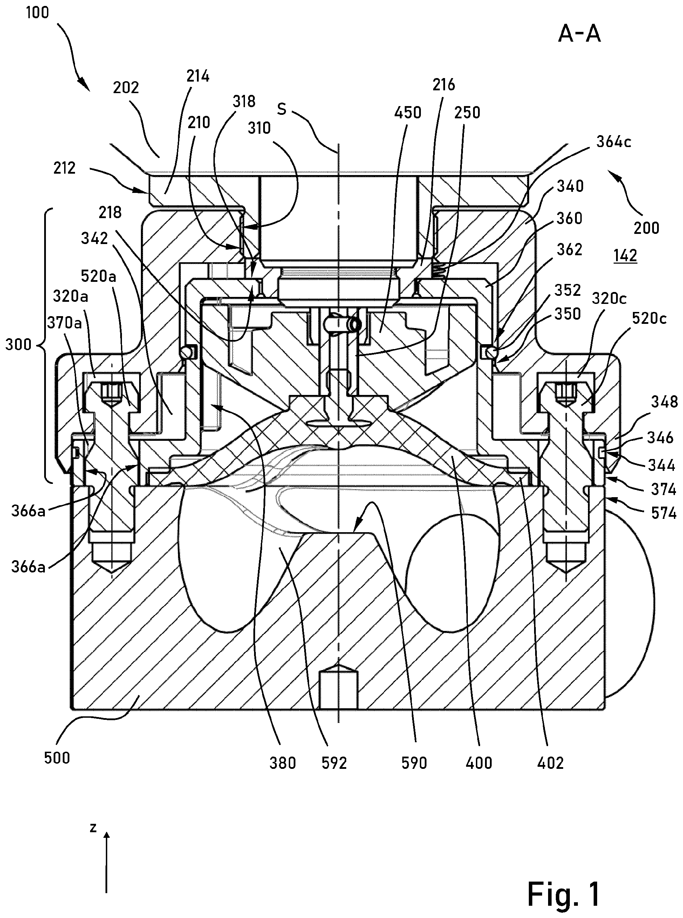

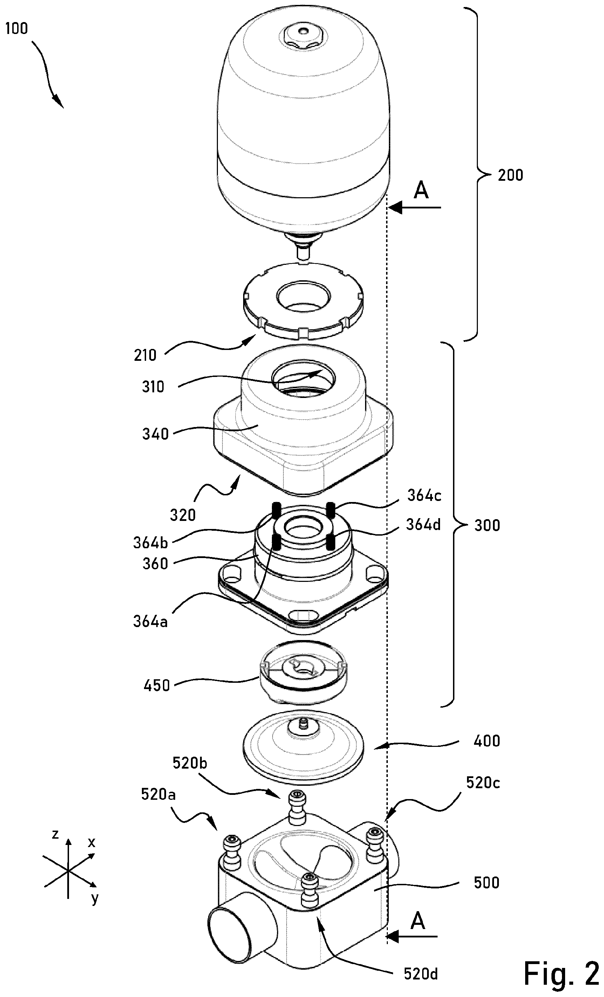

Figur 1 zeigt einen schematischen Schnitt A-A, der in Figur 2 angedeutet ist, eines Teils eines Membranventils 100. Eine Antriebsbaugruppe 200 umfasst mindestens einen Verbindungsabschnitt 210 für eine rotatorische Montage der Antriebsbaugruppe 200 und einer Zwischenbaugruppe 300. Im Betrieb des Membranventils 100 sorgt der Verbindungsabschnitt 210 für eine starre Verbindung zwischen der Antriebsbaugruppe 200, der Zwischenbaugruppe 300 und dem Ventilkörper 500.

Der Verbindungsabschnitt 210 der Antriebsbaugruppe 200 ist drehbar an einem Antriebsgehäuse 202 der Antriebsbaugruppe 200 gelagert. Der Verbindungsabschnitt 210 der Antriebsbaugruppe 200 ist starr mit einer Angriffskontur 212 für ein Werkzeug ist. Ein Montagering 214 umfasst den Verbindungsabschnitt 210 und die umfangsseitige Angriffskontur 212, welches beispielsweise in Umfangsrichtung Ausfräsungen zum Verspannen der Anordnung mit einem Hakenschlüssel umfasst. Der Montagering 214 umfasst eine innere Zylindermantelfläche, die auf eine äußere Zylindermantelfläche der Antriebsbaugruppe 200 aufgebracht ist. Ein Befestigungsring 216 ist fest mit der Antriebsbaugruppe 200 verbunden und legt den Montagering 214 verdrehbar um die Stellachse S zu der Antriebsbaugruppe 200 fest. Der Montagering 214 umfasst einen kreisringförmigen Abschnitt, der außen die Montagekontur 212 mit Rücksprüngen umfasst. Der Montagering 214 umfasst eine von dem kreisringförmigen bzw. scheibenförmigen bzw. flachen Abschnitt parallel zur Stellachse abragende Hülse, welche nach außen den Verbindungsabschnitt 210 umfasst und welche nach innen die innere Zylindermantelfläche umfasst.

Die Zwischenbaugruppe 300 umfasst ein Gehäuse 340 und ein mit zumindest teilweise innerhalb des Gehäuses 340 angeordnetes Spannstück 360. Das Gehäuse 340 umfasst mindestens einen Verbindungsabschnitt 310 für die rotatorische Montage der Antriebsbaugruppe 200 und der Zwischenbaugruppe 300. Ventilsitz 590 anliegt.

Der Verbindungsabschnitt 210 der Antriebsbaugruppe 200 umfasst ein Außengewinde umfasst, welches in ein Innengewinde des Verbindungsabschnitts 310 des Gehäuses 340 eingreift. Die Mittenachsen des Außengewindes und des Innengewindes fallen mit der Stellachse S zusammen.

Das Gehäuse 340 umfasst mindestens einen in einem Innenraum 342 angeordneten Verbindungsabschnitt 320a-d für eine rotatorische Montage der Zwischenbaugruppe 300 und des Ventilkörpers 500. Der Innenraum 342 wird beispielsweise durch Innenwandungen und äußere Öffnungen des Gehäuses 340 begrenzt. Im Betrieb des Membranventils 100 sind die Zwischenbaugruppe 200 und der Ventilkörper 500 starr miteinander verbunden. Der Ventilkörper 500 umfasst den mindestens einen Verbindungsabschnitt 520a-d für die rotatorische Montage der Zwischenbaugruppe 300 und des Ventilkörpers 500.

Die rotatorische Montage der Antriebsbaugruppe 200 und der Zwischenbaugruppe 300 umfasst ein Verdrehen der Baugruppen 200 und 300 gegeneinander um eine Stellachse S. Die rotatorische Montage der Ventilkörpers 500 und der Zwischenbaugruppe 300 umfasst ein Verdrehen der des Ventilkörpers und der Zwischenbaugruppe 300 gegeneinander um eine Stellachse S. Anschließend wird die Antriebsbaugruppe 200 bzw. der Verbindungsabschnitt 210 weiter verdreht. Die Antriebsbaugruppe 200 setzt das Gehäuse 340 bei weiterem Verdrehen des Verbindungsabschnitts 210 unter Zugspannung und das Spannstück 360 unter Druckspannung, um die im Betrieb des Membranventils 100 starre Verbindung zwischen den Baugruppen 200, 300 und 500 zu erreichen.

Eine Membran 400 ist in ihrem lateralen Abschnitt 402 im Betriebszustand zwischen dem Spannstück 360 und dem Ventilkörper 500 angeordnet.

Die Antriebsbaugruppe 200 umfasst einen Kontaktabschnitt 218, welcher zum Einbringen einer in Richtung eines Ventilkörpers 500 gerichteten Kraft in das Spannstück 360 der Zwischenbaugruppe 300 ausgebildet ist. Hierzu weißt das Spannstück einen dem Kontaktabschnitt 218 zugeordneten Kontaktabschnitt 318 auf. Vorteilhaft kann über den Kontaktabschnitt die Klemmkraft, die auf den lateralen Abschnitt 402 der Membran 400 wirkt, in das Spannstück 360 eingebracht werden.

Das Spannstück 360 stützt sich also an dem Kontaktabschnitt 220 der Antriebsbaugruppe 200 ab. Die Antriebsbaugruppe 200 wiederum greift mittels der Gewinde an das Gehäuse 340 an. Im montierten Betriebszustand steht das Gehäuse 340 unter Zug und das Spannstück 360 unter Druck.

Mindestens ein Dichtabschnitt 344 dichtet den Innenraum 342 von einem Außenraum 142 des Membranventils 100 ab. Ein in eine laterale Ausnehmung des Spannstücks 360 eingebrachter Dichtring 346, welcher insbesondere zwischen dem Gehäuse 340 und dem Spannstück 360 und radial außerhalb des Verbindungsabschnitts 320a-d des Gehäuses 340 angeordnet ist, ist Teil des Dichtabschnitts 344. Das Gehäuse 340 umfasst eine in Richtung des Ventilkörpers 500 abragende Schürze oder Schmalwand 348, an deren Innenwand der Dichtabschnitt 344 angeordnet ist. Die Schürze 348 ist auch als Einfassung bezeichenbar, welche eine dem Ventilkörper 500 zugewandte Außenkontur des Spannstücks 360 einfasst.

Nach außen exponierte Oberflächen 374, 574 des Spannstücks 360 und des Ventilkörpers 500 sind zumindest abschnittsweise bündig zueinander.

Eine Verliersicherung 362 legt das Spannstück 360 verliersicher zu dem Gehäuse 340 fest. Die Verliersicherung 362 wird beispielsweise durch einen nach innen ragenden Vorsprung 350 des Gehäuses 340 und einen in einer lateralen Ausnehmung des Spannstücks 360 befindlichen elastischen Ring 352 gebildet. Der Ring 352 befindet sich ausgehend von dem Vorsprung 350 in Richtung der Antriebsbaugruppe 200.

Das Spannstück 360 umfasst eine Mehrzahl von parallel zur Stellachse verlaufender Anlageflächen 366a-d, 368a-d, insbesondere von Durchgangsöffnungen 370a-d durch das Spannstück 360. Die Anlagefläche 366a-d zeigt zur Stellachse S. Die Anlagefläche 368a-d ist von der Stellachse S weggewandt. Die Mehrzahl der Anlageflächen 366a-d, 368a-d stellt eine formschlüssige Verbindung mit dem mindestens einen Verbindungsabschnitt 520 des Ventilkörpers 500 in einer zur Stellachse S lotrechten Ebene bereit. Die Durchgangsöffnungen 370a-d sind Langlöcher, deren jeweilige Längserstreckung entlang einer gemeinsamen gedachten zur Stellachse S lotrecht verlaufenden Kreisbahn mit Mittelpunkt auf der Stellachse S folgt.

Ein Kompressor oder Druckstück 450 ist mit einer entlang der Stellachse S beweglichen und von einem Antrieb der Antriebsbaugruppe 200 angetriebenen Ventilstange 250 verbunden. Innerhalb des Spannstücks 360, insbesondere mittels des Spannstücks 360, ist der Kompressor verdrehsicher und entlang der Stellachse S beweglich gelagert. Beispielsweise greift ein nach innen gewandter, parallel zur Stellachse S verlaufender Vorsprung 380 des Spannstücks 360 in eine äußere Nut des Kompressors 450 ein. Der Kompressor 450 wird zum Verschließen des Membranventils 100 in Richtung eines Ventilsitzes 590 bewegt. Der Prozessfluid führende Prozessfluidkanal 592 wird verschlossen, wenn die Membran 400 bzw. deren zugeordnete nassseitige Oberfläche an dem Ventilsitz 590 anliegt.

Figur 2 zeigt eine Explosionsansicht des Membranventils 100. Die Mehrzahl von Verbindungsabschnitten 520a-d des Ventilkörpers 500 ragt von dem Ventilkörper 500 parallel zur Stellachse S ab und weist einen jeweiligen distalen Kopf auf. Die Verbindungsabschnitte 520a-d sind beispielsweise als Stehbolzen ausgeführt, die in den Ventilkörper 500 eingeschraubt sind.

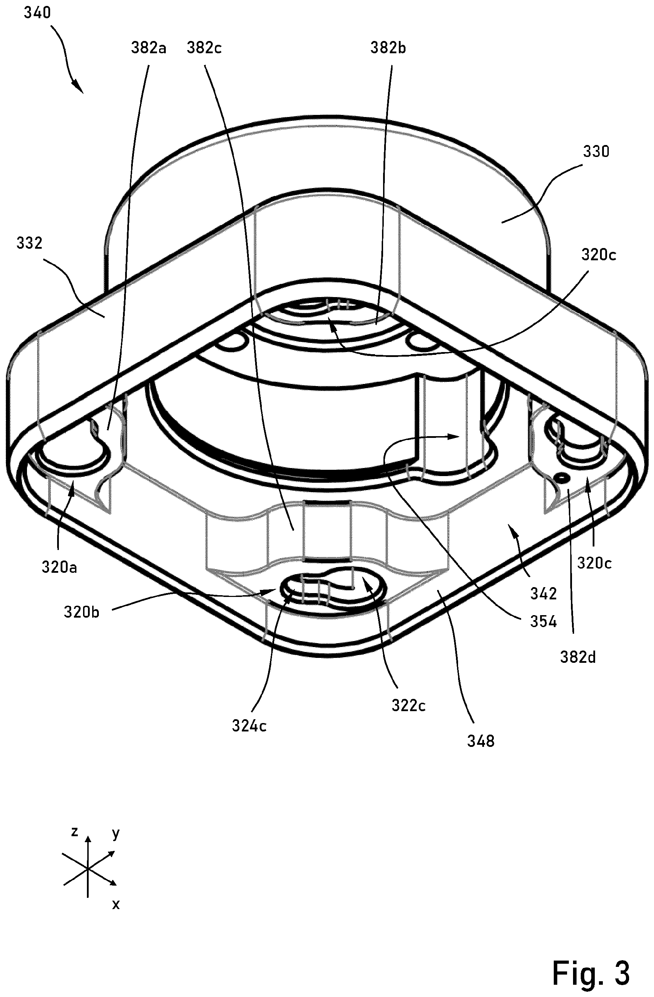

Figur 3 zeigt ein Gehäuse 340 der Zwischenbaugruppe 300. Das Spannstück 360 ist innerhalb des Gehäuses 340, insbesondere mittels des Gehäuses 340, verdrehsicher und entlang der Stellachse S beweglich gelagert. Beispielsweise greift ein äußerer Vorsprung des Spannstücks 360 in eine innere parallel zur Stellachse S verlaufende Nut 354 des Gehäuses 340 ein.

Im Innenraum 342 des Gehäuses 340 sind die Verbindungsabschnitte 320a-d an von Eckbereichen nach innen ragenden Abschnitten 382a-d angeordnet. Zwischen den Abschnitten 382a-d befinden sich Ausnehmungen, die im montierten Zustand des Membranventils 100 freibleiben.

Die distale Schürze 348 ragt ausgehend von den Verbindungsabschnitten 320a-d in Richtung des Ventilkörpers 500 von dem Gehäuse 340 ab.

Die Mehrzahl von im Innenraum 342 angeordneten Verbindungsabschnitten 320a-d des Gehäuses 340 umfasst bajonettartige Bahnen, welche lotrecht zur Stellachse S und lotrecht entlang einer gedachten zur Stellachse S lotrecht verlaufenden Kreisbahn mit Mittelpunkt auf der Stellachse S verlaufen. Die einzelne Bahn umfasst einen Einführabschnitt 322a-d zum Einführen des zugeordneten distalen Kopfes des Verbindungsabschnitts 520a-d und einen Festlegeabschnitt 324a-d zur Festlegung des Kopfes.

Das Gehäuse 340 umfasst einen antriebsseitigen hülsenartigen Abschnitt 330 und einen sich daran anschließenden ventilkörperseitigen flanschartigen Abschnitt 332. Der flanschartige Abschnitt 332 umfasst hat von außen eine flanschartige Erscheinung und ist im inneren hohlraumartig ausgestaltet. Im Betriebszustand bildet die Schürze 348 des Gehäuses 340 eine Teileinfassung für den zugeordneten Teil des Spannstücks 360.

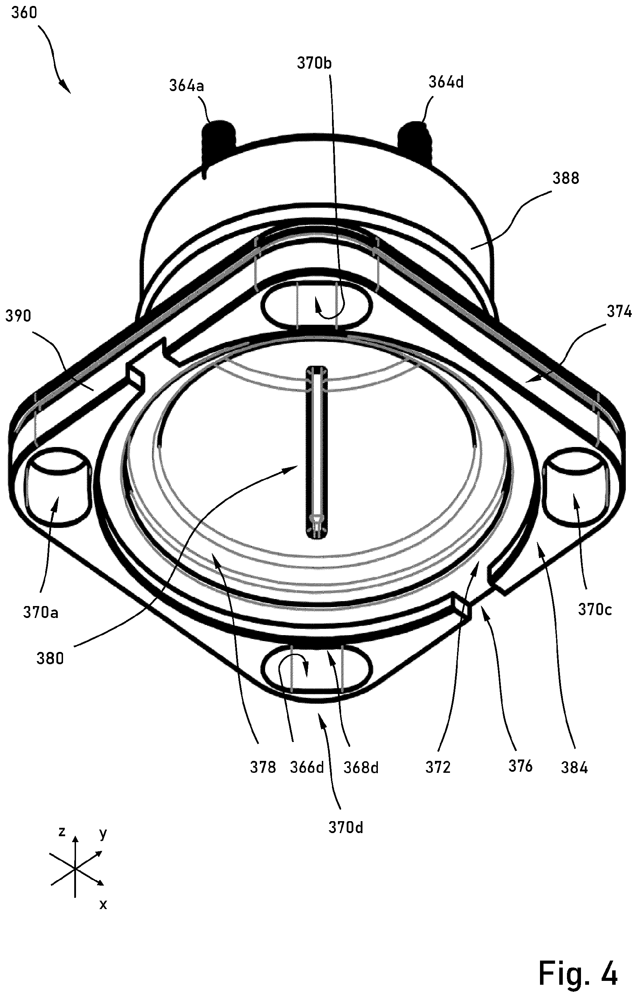

Figur 4 zeigt ein Spannstück 360 der Zwischenbaugruppe 300. Eine distale Oberfläche 384 des Spannstücks 360 liegt im montierten Zustand an dem Ventilkörper 500 an. Das Spannstück 360 umfasst eine Hintersitzkontur 378 zum Abstützen der Membran 500 im Betrieb. Ein nach innen gewandter Aufnahmeabschnitt 372 des Spannstücks 360 nimmt die Membran 400 lotrecht zur Stellachse S formschlüssig auf. Der Aufnahmeabschnitt 372 umfasst auch eine ringförmige Klemmfläche, um den lateralen Bereich der Membran 400 auf die zugeordnete Klemmfläche des Ventilkörpers 500 zu drücken.

Das Spannstück 360 liegt in einem zum Ventilkörper 500 hin angeordneten Bereich nach außen hin frei. So liegt die Oberfläche 374 des Spannstücks 360 zu einem Außenraum des Membranventils frei. Mindestens eine Ausnehmung 376 verbindet den Aufnahmeabschnitt 372 für die Membran 400 und einen Außenraum 142 miteinander

Das Spannstück 360 umfasst einen antriebsseitigen hülsenartigen Abschnitt 388 und einen sich daran anschließenden ventilkörperseitigen flanschartigen Abschnitt 390. Der flanschartige Abschnitt 390 wird im Betriebszustand von der Schürze 348 des Gehäuses 340 teilweise eingefasst.

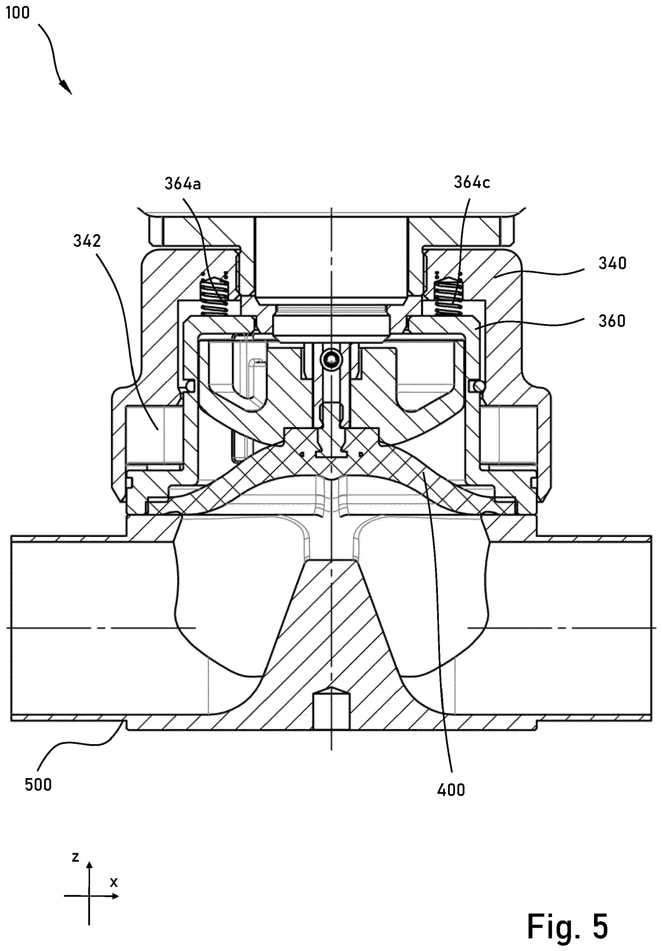

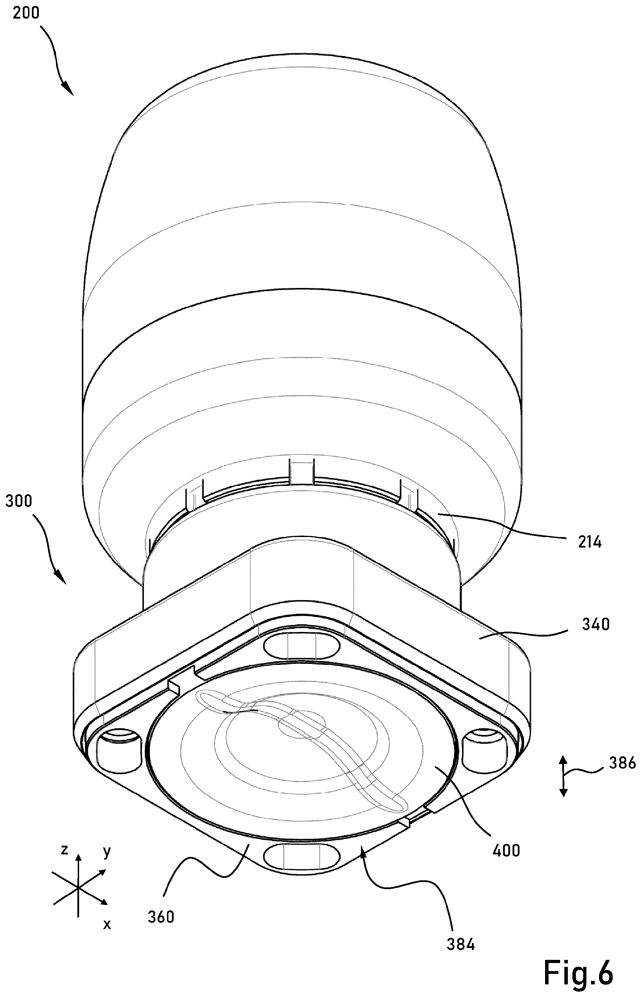

Figur 5 zeigt einen weiteren Schnitt eines Teils des Membranventils 100. Figur 6 zeigt eine perspektivische Ansicht der Zwischenbaugruppe und der Antriebsbaugruppe. Die zwischen dem Gehäuse 340 und dem Spannstück 360 angeordneten Druckfedern 364a-d drücken das Spannstück 360 entlang der Stellachse S des Membranventils 100 von der Antriebsbaugruppe 200 weg. Die distale Oberfläche 384 kann also gemäß einem Doppelpfeil 386 in das Gehäuse 340 hineingedrückt werden und kehrt bei Druckentlastung wieder in den in Figur 6 gezeigten Zustand zurück.

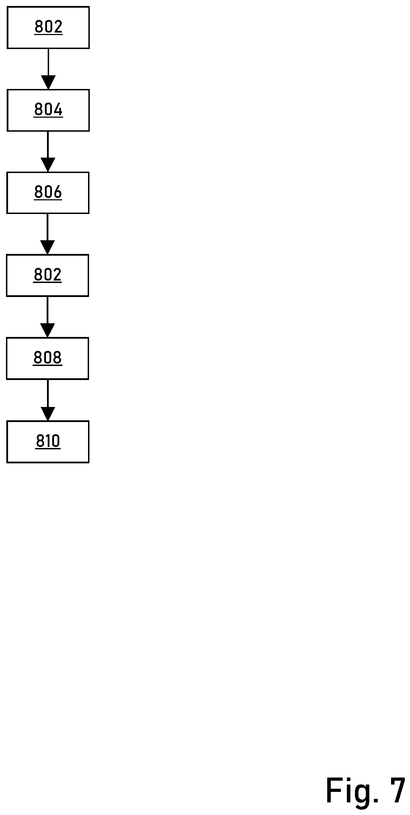

Figur 7 zeigt ein schematisches Ablaufdiagramm zur Montage des Membranventils. Ein Anordnen 802 der Antriebsbaugruppe 200 an der Zwischenbaugruppe 300 wird durch Verdrehen bzw. Eindrehen des Verbindungsabschnitts 210 der Antriebsbaugruppe 200 zu dem bzw. in den Verbindungsabschnitt 310 des Gehäuses 340 der Zwischenbaugruppe 300 erreicht.

Ein Anordnen 804 eines Kompressors oder Druckstücks 450 und einer Membran 400 an einer Ventilstange 250 erfolgt nach dem Anordnung 802. Die Ventilstange 250 ist mit dem Antrieb der Antriebsbaugruppe 200 zu einer Bewegung der Ventilstange 250 entlang der Stellachse S verbunden.

Ein Anordnen der mit der Antriebsbaugruppe 200 verbundenen Zwischenbaugruppe 300 an dem Ventilkörper 500 umfasst eine lineare Bewegung 806 der Zwischenbaugruppe 300 mit der Antriebsbaugruppe 200 entlang bzw. parallel zur Stellachse S auf den Ventilkörper 500 zu, so dass die Verbindungsabschnitte 520a-d des Ventilkörpers 500 zu dem zugeordneten Verbindungsabschnitt 320a-d des Gehäuses 340 der Zwischenbaugruppe 300 vorpositioniert werden, beispielsweise eingefahren bzw. eingeführt werden. Die Köpfe der Verbindungsabschnitte fahren beispielsweise in die zugeordneten Öffnungen der bajonettartigen Bahnen ein.

Ein Verdrehen 808 der Zwischenbaugruppe 300 mit der Antriebsbaugruppe 200 um die Stellachse S zu dem Ventilkörper 500 erfolgt derart, so dass die Verbindungsabschnitte 320a-d des Gehäuses 340 und die Verbindungsabschnitte 520a-d des Ventilkörpers 500 das Gehäuse 340 parallel zur Stellachse S formschlüssig zu dem Ventilkörper 500 festlegen. Durch das Verdrehen der Zwischenbaugruppe 300 zu dem Ventilkörper 500 werden die Spannstifte in Eingriff mit den bajonettartigen Bahnen bzw. Keilnuten gebracht.

Ein Verspannen 810 des lateralen Abschnitts 402 der Membran 400 zwischen dem Ventilkörper 500 und einem Spannstück 360 der Zwischenbaugruppe 300 erfolgt durch weiteres Verdrehen bzw. Eindrehen des Verbindungsabschnitts 210 der Antriebsbaugruppe 200 zu dem bzw. in den Verbindungsabschnitt 310 des Gehäuses 340 der Zwischenbaugruppe 300. Dabei stützt sich das Spannstück 360 an der Antriebsbaugruppe 200 ab.

Die Antriebsbaugruppe 200 setzt durch das weitere Verdrehen das Gehäuse 340 unter Zug und das Spannstück 360 unter Druck. Das weitere Verdrehen des Verbindungsabschnitts 210 der Antriebsbaugruppe 200 bewirkt folglich, dass die Antriebsbaugruppe 200 das Gehäuse 340 zu dem Ventilkörper 500 fixiert werden, und dass die Antriebsbaugruppe 200 über das Spannstück 500 die Membran 400 einspannt.

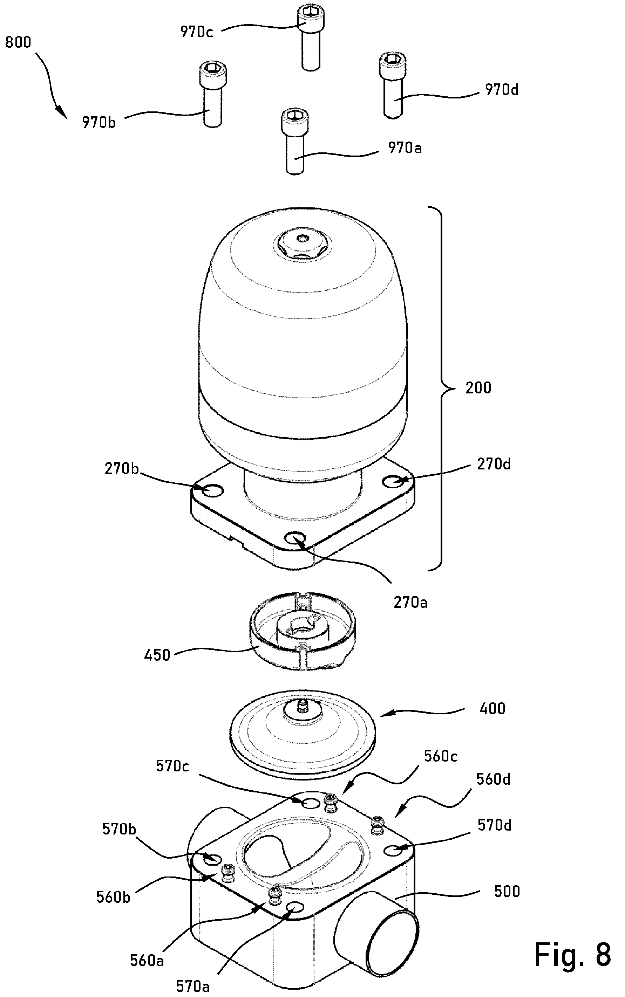

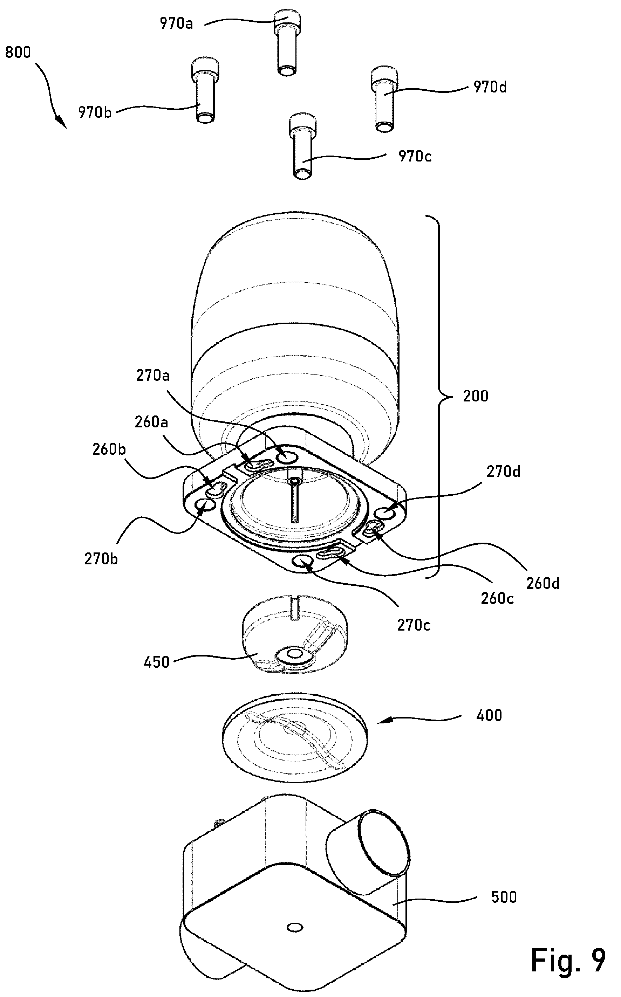

Die Figuren 8 und 9 zeigen jeweils eine Explosionsansicht eines Membranventils 800.

Die Antriebsbaugruppe 200 umfasst als bajonettartige Bahnen ausgebildete erste Verbindungsabschnitte 260a-d, in die Köpfe von als Schrauben ausgebildeten weiteren ersten Verbindungsabschnitten 560a-d des Ventilkörpers 500 eingreifen. Die vorgenannten Verbindungsabschnitte 560a.d können auch anders ausgeführt sein und beispielsweise in den Ventilkörper eingepresste pilzartige Bolzen umfassen. Die Verbindungsabschnitte 260a-d und 560a-d ermöglichen so eine rotatorische Anordnung der Antriebsbaugruppe 200 an den Ventilkörper 500.

Zweite Verbindungsabschnitte 270a-d der Antriebsbaugruppe sind als Durchgangsöffnungen im Flansch der Antriebsbaugruppe 200 ausgeführt. Durch die zweiten Verbindungsabschnitt 270a-d werden Schrauben 970a-d geführt. Ein Außengewinde der jeweiligen Schraube 970a-d greift in einen zweiten Verbindungsabschnitt 570a-d ein, der jeweils als Innengewinde ausgeführt ist. Die Schraube 970a-d stützt sich also am Ventilkörper 500 ab und drückt den Flansch in Richtung Ventilkörper 500 und verklemmt bzw. verspannt damit die Membran 400 zwischen der Antriebsbaugruppe 200 und dem Ventilkörper 500. Selbstverständlich kann die vorgenannte Verbindung kann andersherum ausgeführt werden, indem ein Innengewinde im Flansch und Durchgangsloch im Ventilkörper 500 angeordnet sind.

Die Position, in der die Ausnehmungen gemäß der Verbindungsabschnitte 570a-d und die Durchgangsöffnungen gemäß der Verbindungsabschnitte 270a-d so übereinanderliegen, dass die Schrauben 970a-d in die Ausnehmungen des Ventilkörpers 500 eingreifen können, ist nur dann erreichbar, wenn die zuvor erläuterte rotarische Anordnung stattgefunden hat.

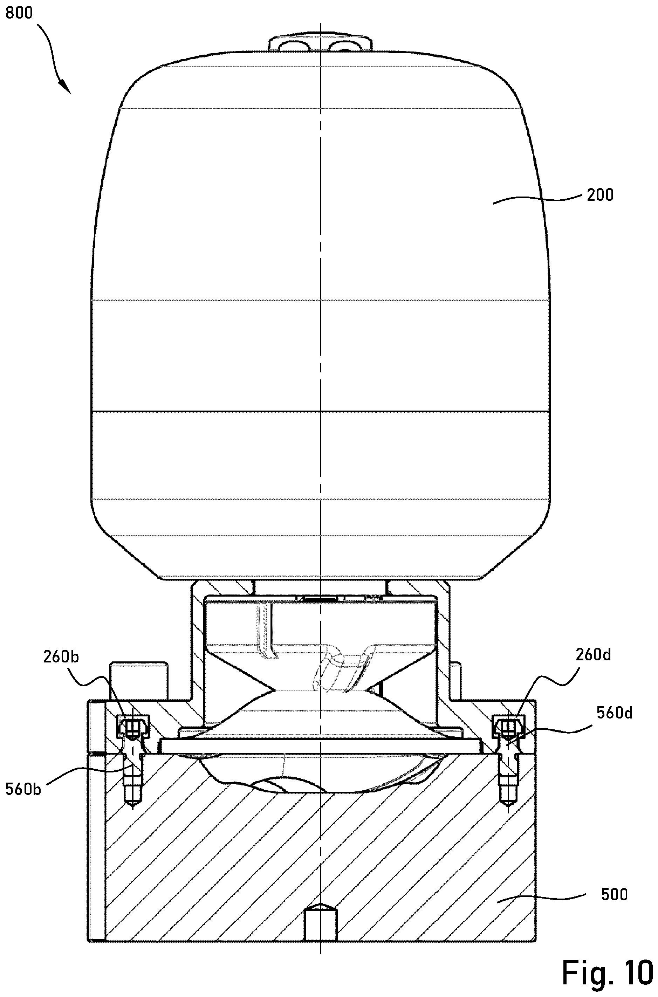

Die Figur 10 zeigt einen Schnitt des Membranventils 800. die Verbindungsabschnitte 560a-d sorgen dafür, dass bei einer Montage des Membranventils 800 zunächst durch die rotatorische Anordnung die Antriebsbaugruppe 200 abziehsicher am Ventilkörper 500 befestigt wird. In dieser Position können die Schrauben 970a-d durch die Durchgangsöffnungen des Flansches geführt und in die Innengewinde der Verbindungsabschnitte 570a-d eingedreht werden, womit die Membran 400 verspannt wird.

## Patentansprüche

1. Ein Membranventil (100) umfassend:
eine Antriebsbaugruppe (200) mit mindestens einem Verbindungsabschnitt (210) für eine rotatorische Montage der Antriebsbaugruppe (200) und einer Zwischenbaugruppe (300);
die Zwischenbaugruppe (300) mit einem Gehäuse (340) und mit einem zumindest teilweise innerhalb eines Innenraums (342) des Gehäuses (340) angeordneten Spannstück (360), wobei das Gehäuse (340) der Zwischenbaugruppe (300) mindestens einen Verbindungsabschnitt (310) für die rotatorische Montage der Antriebsbaugruppe (200) und der Zwischenbaugruppe (300) umfasst, wobei das Gehäuse (340) der Zwischenbaugruppe (300) mindestens einen in dem Innenraum (342) des Gehäuses (340) der Zwischenbaugruppe (300) angeordneten Verbindungsabschnitt (320a-d) für eine rotatorische Montage der Zwischenbaugruppe (300) und des Ventilkörpers (500) umfasst;
eine Membran (400), welche zwischen dem Spannstück (360) und dem Ventilkörper (500) angeordnet ist; und
den Ventilkörper (500) mit mindestens einem Verbindungsabschnitt (520a-d) für die rotatorische Montage der Zwischenbaugruppe (300) und des Ventilkörpers (500).

2. Das Membranventil (100) gemäß dem Anspruch 1, wobei die Antriebsbaugruppe (200) das Gehäuse (340) unter Zugspannung setzt, und wobei die Antriebsbaugruppe (200) das Spannstück (360) unter Druckspannung setzt.

3. Das Membranventil (100) gemäß dem Anspruch 1 oder 2, wobei mindestens ein Dichtabschnitt (344), welcher insbesondere zwischen dem Gehäuse (340) und dem Spannstück (360) und radial außerhalb des Verbindungsabschnitts (320a-d) des Gehäuses (340) angeordnet ist, den Innenraum (342) von einem Außenraum (142) des Membranventils (100) abdichtet.

4. Das Membranventil (100) gemäß einem der vorigen Ansprüche, wobei das Gehäuse (340) eine in Richtung des Ventilkörpers (500) abragende Schürze (348) umfasst, an deren Innenwand insbesondere der Dichtabschnitt (344) angeordnet ist.

5. Das Membranventil (100) gemäß einem der vorigen Ansprüche, wobei eine Verliersicherung (362) das Spannstück (360) verliersicher zu dem Gehäuse (340) festlegt.

6. Das Membranventil (100) gemäß einem der vorigen Ansprüche, wobei mindestens eine zwischen dem Gehäuse (340) und dem Spannstück (360) angeordnete Druckfeder (364a-d) das Spannstück (360) entlang der Stellachse (S) des Membranventils (100) von der Antriebsbaugruppe (200) weg drückt.

7. Das Membranventil (100) gemäß einem der vorigen Ansprüche, wobei das Spannstück (360) eine Mehrzahl von Anlageflächen (366a-d, 368a-d), insbesondere von Durchgangsöffnungen (370a-d) durch das Spannstück (360), umfasst, wobei die Mehrzahl der Anlageflächen (366a-d, 368a-d) eine formschlüssige Verbindung mit dem mindestens einen Verbindungsabschnitt (520) des Ventilkörpers (500) in einer zur Stellachse (S) lotrechten Ebene bereitstellt.

8. Das Membranventil (100) gemäß einem der vorigen Ansprüche, wobei ein Aufnahmeabschnitt (372) des Spannstücks (360) die Membran (400) lotrecht zur Stellachse (S) formschlüssig aufnimmt.

9. Das Membranventil (100) gemäß einem der vorigen Ansprüche, wobei das Spannstück (360) in einem zum Ventilkörper (500) angeordneten Bereich nach außen hin freiliegt, und wobei mindestens eine Ausnehmung (376) den Aufnahmeabschnitt (372) für die Membran (400) und einen Außenraum (142) miteinander verbindet.

10. Das Membranventil (100) gemäß einem der vorigen Ansprüche, wobei nach außen exponierte Oberflächen (374; 574) des Spannstücks (360) und des Ventilkörpers (500) zumindest abschnittsweise bündig zueinander sind.

11. Das Membranventil (100) gemäß einem der vorigen Ansprüche, wobei das Spannstück (360) innerhalb des Gehäuses (340), insbesondere mittels des Gehäuses (340), verdrehsicher und entlang der Stellachse (S) beweglich gelagert ist.

12. Das Membranventil (100) gemäß einem der vorigen Ansprüche, wobei ein mit einer entlang der Stellachse (S) beweglichen Ventilstange (250) verbundener Kompressor (450) innerhalb des Spannstücks (360), insbesondere mittels des Spannstücks (360), verdrehsicher und entlang der Stellachse (S) beweglich gelagert ist.

13. Das Membranventil (100) gemäß einem der vorigen Ansprüche, wobei der Verbindungsabschnitt (210) der Antriebsbaugruppe (200) ein Außengewinde umfasst, welches in ein Innengewinde des Verbindungsabschnitts (310) des Gehäuses (340) eingreift.

14. Das Membranventil (100) gemäß dem vorigen Anspruch, wobei der Verbindungsabschnitt (210) der Antriebsbaugruppe (200) drehbar an der Antriebsbaugruppe (200) gelagert ist und/oder wobei der Verbindungsabschnitt (210) der Antriebsbaugruppe (200) mit einer Angriffskontur (212) für ein Werkzeug starr verbunden ist.

15. Das Membranventil (100) gemäß einem der vorigen Ansprüche, wobei eine Mehrzahl von Verbindungsabschnitten (520a-d) des Ventilkörpers (500) von dem Ventilkörper (500) parallel zur Stellachse (S) abragen und distalen Kopf aufweisen, und wobei eine Mehrzahl von im Innenraum (342) angeordneter Verbindungsabschnitte (320a-d) des Gehäuses (340)Bahnen, welche lotrecht zur Stellachse (S) verlaufen, bereitstellen, wobei die einzelne Bahn einen Einführabschnitt (322a-d) zum Einführen des zugeordneten distalen Kopfes des Verbindungsabschnitts (520a-d) und einen Festlegeabschnitt (324a-d) zur Festlegung des Kopfes umfassen.

16. Ein Verfahren zur Montage eines Membranventils (100) umfassend:
Anordnen (802) einer Antriebsbaugruppe (200) an einer Zwischenbaugruppe (300) durch Verdrehen eines Verbindungsabschnitts (210) der Antriebsbaugruppe (200) zu einem Verbindungsabschnitt (310) eines Gehäuses (340) der Zwischenbaugruppe (300);
Anordnen (804) eines Kompressors (450) und einer Membran (400) an einer Ventilstange (250), welche mit einem Antrieb der Antriebsbaugruppe (200) zu einer Bewegung entlang der Stellachse (S) verbunden ist;
Anordnen (806, 808) der mit der Antriebsbaugruppe (200) verbundenen Zwischenbaugruppe (300) an einem Ventilkörper (500) durch
(a) Bewegung (806) der Zwischenbaugruppe (300) auf den Ventilkörper (500) zu, so dass mindestens ein Verbindungsabschnitt (520a-d) des Ventilkörpers (500) zu mindestens einem zugeordneten Verbindungsabschnitt (320a-d) des Gehäuses (340) der Zwischenbaugruppe (300) vorpositioniert wird, und
(b) Verdrehen (808) der Zwischenbaugruppe (300) zu dem Ventilkörper (500), so dass der mindestens eine Verbindungsabschnitt (320a-d) des Gehäuses (340) und der mindestens eine Verbindungsabschnitt (520a-d) des Ventilkörpers (500) das Gehäuse (340) parallel zur Stellachse (S) formschlüssig zu dem Ventilkörper (500) festlegen; und
Verspannen (810) eines lateralen Abschnitts (402) der Membran (400) zwischen dem Ventilkörper (500) und einem Spannstück (360) der Zwischenbaugruppe (300) durch Verdrehen des Verbindungsabschnitts (210) der Antriebsbaugruppe (200) zu dem Verbindungsabschnitt (310) des Gehäuses (340) der Zwischenbaugruppe (300).

## Claims

1. A diaphragm valve (100) comprising:
a drive assembly (200) having at least one connecting portion (210) for a rotational mounting of the drive assembly (200) and an intermediate assembly (300);
the intermediate assembly (300) having a housing (340) and having a clamping piece (360) arranged at least partially within an interior space (342) of the housing (340), wherein the housing (340) of the intermediate assembly (300) comprises at least one connecting portion (310) for the rotational mounting of the drive assembly (200) and the intermediate assembly (300), wherein the housing (340) of the intermediate assembly (300) comprises at least one connecting portion (320a-d) arranged in the interior space (342) of the housing (340) of the intermediate assembly (300) for a rotational mounting of the intermediate assembly (300) and the valve body (500);
a diaphragm (400) arranged between the clamping piece (360) and the valve body (500); and
the valve body (500) having at least one connecting portion (520a-d) for the rotational mounting of the intermediate assembly (300) and the valve body (500).

2. The diaphragm valve (100) according to claim 1, wherein the drive assembly (200) places the housing (340) under tensile stress, and wherein the drive assembly (200) places the clamping piece (360) under compressive stress.

3. The diaphragm valve (100) according to claim 1 or 2, wherein at least one sealing portion (344), which is arranged in particular between the housing (340) and the clamping piece (360) and radially outside the connecting portion (320a-d) of the housing (340), seals the interior space (342) from an exterior space (142) of the diaphragm valve (100).

4. The diaphragm valve (100) according to any of the preceding claims, wherein the housing (340) comprises an apron (348) projecting in the direction of the valve body (500), on the inner wall of which the sealing portion (344) in particular is arranged.

5. The diaphragm valve (100) according to any of the preceding claims, wherein a loss-preventing device (362) secures the clamping piece (360) to the housing (340) in a loss-preventing manner.

6. The diaphragm valve (100) according to any of the preceding claims, wherein at least one compression spring (364a-d) arranged between the housing (340) and the clamping piece (360) presses the clamping piece (360) away from the drive assembly (200) along the actuating axis (S) of the diaphragm valve (100).

7. The diaphragm valve (100) according to any of the preceding claims, wherein the clamping piece (360) comprises a plurality of contact surfaces (366a-d, 368a-d), in particular of through-openings (370a-d) through the clamping piece (360), wherein the plurality of contact surfaces (366a-d, 368a-d) provide a form-fitting connection with the at least one connecting portion (520) of the valve body (500) in a plane perpendicular to the actuating axis (S).

8. The diaphragm valve (100) according to any of the preceding claims, wherein a receiving portion (372) of the clamping piece (360) receives the diaphragm (400) in a form-fitting manner perpendicular to the actuating axis (S).

9. The diaphragm valve (100) according to any of the preceding claims, wherein the clamping piece (360) is exposed to the outside in a region arranged relative to the valve body (500), and wherein at least one recess (376) connects the receiving portion (372) for the diaphragm (400) and an exterior space (142) to one another.

10. The diaphragm valve (100) according to any of the preceding claims, wherein outwardly exposed surfaces (374; 574) of the clamping piece (360) and of the valve body (500) are at least partially flush with one another.

11. The diaphragm valve (100) according to any of the preceding claims, wherein the clamping piece (360) is mounted within the housing (340), in particular by means of the housing (340), in a rotationally secure manner and movable along the actuating axis (S).

12. The diaphragm valve (100) according to any of the preceding claims, wherein a compressor (450) connected to a valve rod (250) movable along the actuating axis (S) is mounted within the clamping piece (360), in particular by means of the clamping piece (360), in a rotationally secure manner and movable along the actuating axis (S).

13. The diaphragm valve (100) according to any of the preceding claims, wherein the connecting portion (210) of the drive assembly (200) comprises an external thread which engages with an internal thread of the connecting portion (310) of the housing (340).

14. The diaphragm valve (100) according to the preceding claim, wherein the connecting portion (210) of the drive assembly (200) is rotatably mounted on the drive assembly (200) and/or wherein the connecting portion (210) of the drive assembly (200) is rigidly connected to an engagement contour (212) for a tool.

15. The diaphragm valve (100) according to any of the preceding claims, wherein a plurality of connecting portions (520a-d) of the valve body (500) project from the valve body (500) in parallel with the actuating axis (S) and have a distal head, and wherein a plurality of connecting portions (320a-d) of the housing (340) arranged in the interior space (342) provide tracks which run perpendicular to the actuating axis (S), wherein the individual tracks comprise an insertion portion (322a-d) for inserting the associated distal head of the connecting portion (520a-d) and a fixing portion (324a-d) for fixing the head.

16. A method for assembling a diaphragm valve (100) comprising:
arranging (802) a drive assembly (200) on an intermediate assembly (300) by rotating a connecting portion (210) of the drive assembly (200) relative to a connecting portion (310) of a housing (340) of the intermediate assembly (300);
arranging (804) a compressor (450) and a diaphragm (400) on a valve rod (250) which is connected to a drive of the drive assembly (200) for movement along the actuating axis (S);
arranging (806, 808) the intermediate assembly (300) connected to the drive assembly (200) on a valve body (500) by
(a) moving (806) the intermediate assembly (300) toward the valve body (500) so that at least one connecting portion (520a-d) of the valve body (500) is pre-positioned relative to at least one associated connecting portion (320a-d) of the housing (340) of the intermediate assembly (300), and
(b) rotating (808) the intermediate assembly (300) relative to the valve body (500) such that the at least one connecting portion (320a-d) of the housing (340) and the at least one connecting portion (520a-d) of the valve body (500) fix the housing (340) parallel to the actuating axis (S) in a form-fitting manner relative to the valve body (500); and
clamping (810) a lateral portion (402) of the membrane (400) between the valve body (500) and a clamping piece (360) of the intermediate assembly (300) by rotating the connecting portion (210) of the drive assembly (200) relative to the connecting portion (310) of the housing (340) of the intermediate assembly (300).

## Revendications

1. Soupape à membrane (100) comprenant:
un ensemble d'entraînement (200) comportant au moins une section de liaison (210) pour un montage rotatif de l'ensemble d'entraînement (200) et d'un ensemble intermédiaire (300);
l'ensemble intermédiaire (300) comportant un boîtier (340) et comportant une pièce de serrage (360) disposée au moins partiellement à l'intérieur d'un espace intérieur (342) du boîtier (340), dans laquelle le boîtier (340) de l'ensemble intermédiaire (300) comprend au moins une section de liaison (310) pour le montage rotatif de l'ensemble d'entraînement (200) et de l'ensemble intermédiaire (300), dans laquelle le boîtier (340) de l'ensemble intermédiaire (300) comprend au moins une section de liaison (320a-d) disposée dans l'espace intérieur (342) du boîtier (340) de l'ensemble intermédiaire (300) pour un montage rotatif de l'ensemble intermédiaire (300) et du corps de soupape (500);
une membrane (400) qui est disposée entre la pièce de serrage (360) et le corps de soupape (500); et
le corps de soupape (500) comportant au moins une section de liaison (520a-d) pour le montage rotatif de l'ensemble intermédiaire (300) et du corps de soupape (500).

2. Soupape à membrane (100) selon la revendication 1, dans laquelle l'ensemble d'entraînement (200) met le boîtier (340) sous tension de traction, et dans laquelle l'ensemble d'entraînement (200) met la pièce de serrage (360) sous tension de compression.

3. Soupape à membrane (100) selon la revendication 1 ou 2, dans laquelle au moins une section d'étanchéité (344) disposée en particulier entre le boîtier (340) et la pièce de serrage (360) et radialement à l'extérieur de la section de liaison (320a-d) du boîtier (340) assure l'étanchéité entre l'espace intérieur (342) et un espace extérieur (142) de la soupape à membrane (100).

4. Soupape à membrane (100) selon l'une des revendications précédentes, dans laquelle le boîtier (340) comprend une jupe (348) faisant saillie en direction du corps de soupape (500), sur la paroi intérieure de laquelle est en particulier disposée la section d'étanchéité (344).

5. Soupape à membrane (100) selon l'une des revendications précédentes, dans laquelle un dispositif antiperte (362) fixe la pièce de serrage (360) de manière à ne pas la perdre par rapport au boîtier (340).

6. Soupape à membrane (100) selon l'une des revendications précédentes, dans laquelle au moins un ressort de compression (364a-d) disposé entre le boîtier (340) et la pièce de serrage (360) pousse la pièce de serrage (360) le long de l'axe de réglage (S) de la soupape à membrane (100) de manière à l'éloigner de l'ensemble d'entraînement (200).

7. Soupape à membrane (100) selon l'une des revendications précédentes, dans laquelle la pièce de serrage (360) comprend une pluralité de surfaces d'appui (366a-d, 368a-d), en particulier d'ouvertures de passage (370a-d) à travers la pièce de serrage (360), dans laquelle la pluralité de surfaces d'appui (366a-d, 368a-d) fournit une liaison par complémentarité de forme avec l'au moins une section de liaison (520) du corps de soupape (500) dans un plan perpendiculaire à l'axe de réglage (S).

8. Soupape à membrane (100) selon l'une des revendications précédentes, dans laquelle une section de réception (372) de la pièce de serrage (360) reçoit la membrane (400) par complémentarité de forme perpendiculairement à l'axe de réglage (S).

9. Soupape à membrane (100) selon l'une des revendications précédentes, dans laquelle la pièce de serrage (360) est exposée vers l'extérieur dans une zone disposée par rapport au corps de soupape (500), et dans laquelle au moins un évidement (376) relie la section de réception (372) pour la membrane (400) et un espace extérieur (142) l'un à l'autre.

10. Soupape à membrane (100) selon l'une des revendications précédentes, dans laquelle des surfaces (374; 574) de la pièce de serrage (360) et du corps de soupape (500) exposées vers l'extérieur sont à fleur l'une de l'autre au moins dans certaines sections.

11. Soupape à membrane (100) selon l'une des revendications précédentes, dans laquelle la pièce de serrage (360) est montée à l'intérieur du boîtier (340) de manière à ne pas pouvoir tourner et à pouvoir se déplacer le long de l'axe de réglage (S), en particulier au moyen du boîtier (340).

12. Soupape à membrane (100) selon l'une des revendications précédentes, dans laquelle un compresseur (450) relié à une tige de soupape (250) pouvant se déplacer le long de l'axe de réglage (S) est monté à l'intérieur de la pièce de serrage (360) de manière à ne pas pouvoir tourner et à pouvoir se déplacer le long de l'axe de réglage (S), en particulier au moyen de la pièce de serrage (360).

13. Soupape à membrane (100) selon l'une des revendications précédentes, dans laquelle la section de liaison (210) de l'ensemble d'entraînement (200) comprend un filetage extérieur qui vient en prise dans un filetage intérieur de la section de liaison (310) du boîtier (340).

14. Soupape à membrane (100) selon la revendication précédente, dans laquelle la section de liaison (210) de l'ensemble d'entraînement (200) est montée de manière à pouvoir tourner sur l'ensemble d'entraînement (200) et/ou dans laquelle la section de liaison (210) de l'ensemble d'entraînement (200) est reliée de manière rigide à un contour de prise (212) pour un outil.

15. Soupape à membrane (100) selon l'une des revendications précédentes, dans laquelle une pluralité de sections de liaison (520a-d) du corps de soupape (500) font saillie depuis le corps de soupape (500) parallèlement à l'axe de réglage (S) et présentent une tête distale, et dans laquelle une pluralité de sections de liaison (320a-d) du boîtier (340) disposées dans l'espace intérieur (342) fournissent des trajectoires qui s'étendent perpendiculairement à l'axe de réglage (S), dans laquelle la trajectoire unique comprend une section d'insertion (322a-d) pour l'insertion de la tête distale associée de la section de liaison (520a-d) et une section de fixation (324a-d) pour la fixation de la tête.

16. Procédé pour le montage d'une soupape à membrane (100) comprenant:
la disposition (802) d'un ensemble d'entraînement (200) sur un ensemble intermédiaire (300) en faisant tourner une section de liaison (210) de l'ensemble d'entraînement (200) vers une section de liaison (310) d'un boîtier (340) de l'ensemble intermédiaire (300);
la disposition (804) d'un compresseur (450) et d'une membrane (400) sur une tige de soupape (250) qui est reliée à un entraînement de l'ensemble d'entraînement (200) pour un déplacement le long de l'axe de réglage (S) ;
la disposition (806, 808) de l'ensemble intermédiaire (300) relié à l'ensemble d'entraînement (200) sur un corps de soupape (500) par
(a) le déplacement (806) de l'ensemble intermédiaire (300) vers le corps de soupape (500) de sorte qu'au moins une section de liaison (520a-d) du corps de soupape (500) est prépositionnée par rapport à au moins une section de liaison (320a-d) associée du boîtier (340) de l'ensemble intermédiaire (300), et
(b) la rotation (808) de l'ensemble intermédiaire (300) par rapport au corps de soupape (500), de sorte que l'au moins une section de liaison (320a-d) du boîtier (340) et l'au moins une section de liaison (520a-d) du corps de soupape (500) fixent le boîtier (340), parallèlement à l'axe de réglage (S), par complémentarité de forme par rapport au corps de soupape (500); et
le serrage (810) d'une section latérale (402) de la membrane (400) entre le corps de soupape (500) et une pièce de serrage (360) de l'ensemble intermédiaire (300) en faisant tourner la section de liaison (210) de l'ensemble d'entraînement (200) vers la section de liaison (310) du boîtier (340) de l'ensemble intermédiaire (300).
